# EUROPEAN PATENT APPLICATION

(11) **EP 3 205 476 A1**
(43) Date of publication of application: **16.08.2017**
(21) Application number: 16155422.5
(22) Date of filing: 12.02.2016
(51) Int. Cl.: B29C 53/60, F16L 9/12, F16L 9/16, B29C 53/58

(54) **HOLLOW ARTICLE MADE OF UHMWPE TAPES**

(71) Applicant: Maastricht University, 6211 LK Maastricht (NL)
(72) Inventor: VAN RUTH, Nico, 5617 BN Eindhoven (NL); RASTOGI, Sanjay, 5631 LN Eindhoven (NL)
(74) Representative: CPW GmbH

(57) **Abstract**

The invention pertains pipe-like hollow article made of ultra-high molecular weight polyethylene (UHMWPE) tapes and a resin, whereby in the article the tapes are wound to create the article, wherein the main extension direction of at least 10 wt% of the tapes in the article is in the range of 15 to -15° with regard to the extension direction of the article.

Further aspects of the invention pertain to processes for manufacturing such an article and to sports equipment comprising said article.

## Description

The invention pertains to a pipe-like hollow article made of ultra-high molecular weight polyethylene (UHMWPE) tapes and a resin, whereby the tapes are wound to create said article and wherein the extension direction of at least 10 wt% of the tapes is at an angle of -15 to 15° with regard to the extension direction of the pipe-like hollow article.

Hollow articles made of UHMWPE are known in the art.

In EP 0 223 252 a method for preparing a molded article of UHMWPE is disclosed. A thin-wall UHMWPE porous sheet is molded into a thin-wall article, whereby the porous sheet is prepared by feeding UHMWPE powder between at least two heated rolls and melting it into a sheet at a molding temperature more than 140 °C. For producing the molded article a temperature in the range of more than 150°C is used for melting the UHMWPE. The applied tapes have a low tensile strength and low modulus and thus also the article has a low dimensional stability.

In WO 2012/097083 a method for manufacturing ballistic helmets is disclosed. For the helmet Tensylon or Dyneema is used, whereby this ballistic-tolerant tape has been coated with a thermoplastic or thermosetting adhesive and is wound around a solid mandrel. The winding results in a spheroid structure, which can be cut into two equally-spaced preforms. Although the winding angles and sequences of the winding machine used in this process may be changed, the hollow article of this document is always spheroid.

The aim of this invention is to create a pipe-like hollow article, which has a high flexural modulus, in combination with a high flexural strength, i.e. a high resistance to bending and thus a high stiffness, and high ability to withstand flexural stress. This property is especially important for articles which are exposed to flexural stress, to maintain their integrity, and also to substantially maintain their shape, as e.g. sports articles and equipment, more specifically parts thereof, as e.g. shafts. The advantage of the present pipe-like hollow article is that it combines a low weight with a high stiffness and strength, especially when considering the flexural modulus and strength relative to the weight of the article.

The aim is achieved by a pipe-like hollow article comprising ultra-high molecular weight polyethylene (UHMWPE) tapes and a resin, whereby in the article the tapes are wound to create the article wherein the extension direction of at least 10 wt% of the tapes in the article is at an angle in the range of -15° to 15° with regard to the extension direction of the article.

In EP 0 803 347 an improved coating for e.g. fabrics for tanks is disclosed. This coating has an improved resistance to permeation of aromatics and mineral acids and resistance to bend cracking. To achieve this, ultra-high molecular weight polyethylene tapes are used, whereby all tapes are helically wounded on a core to create the article. EP 0 803 347 does not disclose that the extension direction of at least 10 wt% of the tapes is in the range of -15° to 15° with regard to the extension direction of the article. Flexural modulus and advantages of winding arrangements for the tapes are not discussed in this document.

EP 2 307 180 discloses ultra-high molecular weight polyethylene tapes, whereby the tapes have a tensile strength of greater than 1.5 GPa according to ASTM D882-00 and an modulus of greater than 100 GPa according to ASTM D822-00 and a 200/110 uniplanar orientation parameter of at least 3. This document does not disclose the use of such tapes for pipe-like articles and no arrangement of tapes in articles is discussed. In addition, EP 2 307 180 gives no hints in respect of an arrangement of such tapes in an article for improving the flexural modulus of such an article.

WO2015/022234 discloses a pipe-like hollow article comprising UHMWPE tapes whereby at least half of the tapes of the article are arranged at an angle of 20 to 100° with regard to the extension direction of the article. WO2015/022234 focusses on burst pressure properties and is silent on the flexural modulus of the article.

A pipe-like hollow article according to the invention is a tubular article where one dimension is greater than the other dimensions, such that the length dimension is greater than the dimension of width or width and height. Preferably the pipe-like article has a round or oblong cross section, but is may also have a rectangular or irregular cross section. In one embodiment, a pipe-like article should be understood as an article, which has two ends approximately perpendicular to the extension direction of the pipe. After production of such pipe-like hollow article these ends are usually open, but may be closed during production of a final article comprising the pipe-like hollow article of this invention.
The outer and/or inner diameter and /or the cross sectional shape of the pipe-like hollow article may vary along the length thereof. For example, the pipe-like hollow article may have a tapered shape, thus the diameter increases over the length. Independently of the cross section and the diameter, the pipe-like hollow article may be of any shape. For example, it may be substantially straight, but it may also be curved.

The UHMWPE used in the invention can be a homopolymer of ethylene or a copolymer of ethylene with a co-monomer which is another alpha-olefin or a cyclic olefin both with generally between 3 and 20 carbon atoms. Examples include propene, 1-butene, 1-pentene, 1-hexene, 1-heptene, 1-octene, cyclohexene, etc. The use of dienes with up to 20 carbon atoms is also possible, e.g., butadiene or 1-4 hexadiene. The amount of (non-ethylene) alpha-olefin in the ethylene homopolymer or copolymer used in the process according to the invention preferably is at most 10 mol%, preferably at most 5 mol%, more preferably at most 1 mol%. If a (non-ethylene) alpha-olefin is used, it is generally present in an amount of at least 0.001 mol%, in particular at least 0.01 mol%, still more in particular at least 0.1 mol%.

The used UHMWPE tapes have a weight average molecular weight of at least 500 000 gram/mol, in particular between 1.10⁶ gram/mol and 1.10⁸ gram/mol. The weight average molecular weight is determined in accordance with ASTM D 6474-99 at a temperature of 160°C using 1,2,4-trichlorobenzene (TCB) as solvent. Appropriate chromatographic equipment (PL-GPC220 from Polymer Laboratories) including a high temperature sample preparation device (PL-SP260) may be used. For determination of the average molecular weight greater than two million g/mol rheological methods described in Talebi et al (Macromolecules 2010, 43, 2780-2788; DOI: 10.1021/ma902297b) can also be used. In this method oscillatory shear measurements and stress relaxation in the linear viscoelastic (LVE) regime are performed using a Rheometrics RMS 800 strain controlled spectrometer over a broad range of temperatures (140-220 °C), angular frequencies (0.001 to 100 rad/s) and strains (0.5 to 2%). By performing strain sweeps the LVE region is established. Due to high sample stiffness, parallel plate geometry is used with a disk diameter of 8 mm. Sample thickness is 1 mm. For the high molar mass materials, stress relaxation experiments are performed to expand the time window of the measurements. Prior to the measurements, the polymer powders are first compressed at 50 °C and 200 bars and the thus obtained disks of 8 mm diameter from the sintered powder are heated fast (∼ 30 °C/min) to well above the equilibrium melting temperature in the rheometer. Stress relaxation and frequency sweep experiments are performed by applying strain amplitude in the LVE regime.

The tensile strength of the UHMWPE tapes (also referred as tapes) is determined in accordance with ASTM D882-00. Depending on the stretching ratio and stretching temperature, tensile strengths may be obtained of at least 1.5 GPa, or at least 1.7 GPa. In some embodiments, tapes with a tensile strength of at least 2.0 GPa may be used. Preferably, at least some tapes with a tensile strength of at least 2.5 GPa are used in the pipe-like hollow article, in particular at least 3.0 GPa, more in particular at least 3.5 GPa. Tapes having a tensile strength of at least 4 GPa may also be used. Preferably, the modulus of the UHMWPE tapes is at least 150 GPa. The modulus is determined in accordance with ASTM D822-00. More preferably, tapes having moduli of at least 175 GPa, or at least 200 GPa are used. In some applications where high flexural modulus is the very important, tapes with lower strength may be used. In some applications where high flexural strength is very important, tapes with lower modulus and higher strength may be used, particularly in applications where a high elongation at break is required a tape with lower modulus may be used. In the context of this application, the elongation at break of the tapes is defined as tensile strength divided by tensile modulus.

Preferably the tapes have a high tensile energy to break. The tensile energy to break is determined in accordance with ASTM D882-00 using a strain rate of 50%/min. It is calculated by integrating the energy per unit mass under the stress-strain curve. Depending on the stretching ratio, tapes may be obtained which have a tensile energy to break of at least 15 J/g, or a tensile energy to break of at least 25 J/g. In some embodiments a material may be obtained with a tensile energy to break of at least 30 J/g, in particular at least 40 J/g, more in particular at least 50 J/g.

Preferably, some or all of the tapes used as starting material in the present invention have a 200/110 uniplanar orientation parameter φ of at least 3. The 200/110 uniplanar orientation parameter φ is defined as the ratio between the 200 and the 110 peak areas in the X-ray diffraction (XRD) pattern of the tape sample as determined in reflection geometry. Wide angle X-ray scattering (WAXS) is a technique that provides information on the crystalline structure of matter. The technique specifically refers to the analysis of Bragg peaks scattered at wide angles. Bragg peaks result from long-range structural order. A WAXS measurement produces a diffraction pattern, i.e. intensity as function of the diffraction angle 2θ (this is the angle between the diffracted beam and the primary beam).
The 200/110 uniplanar orientation parameter gives information about the extent of orientation of the 200 and 110 crystal planes with respect to the tape surface. For a tape sample with a high 200/110 uniplanar orientation the 200 crystal planes are highly oriented parallel to the tape surface. The ratio between the 200 and 110 peak areas for a specimen with randomly oriented crystallites is around 0.4.
The value for the 200/110 uniplanar orientation parameter may be determined using an X-ray diffractometer. A Bruker-AXS D8 diffractometer equipped with focusing multilayer X-ray optics (Göbel mirror) producing Cu-Kα radiation (K wavelength = 1.5418 Å) is suitable. Measuring conditions: 2 mm anti-scatter slit, 0.2 mm detector slit and generator setting 40kV, 35mA. The tape specimen is mounted on a sample holder, e.g. with some double-sided mounting tape. The preferred dimensions of the tape sample are 15 mm x 15 mm (I x w). Care should be taken that the sample is kept perfectly flat and aligned to the sample holder. The sample holder with the tape specimen is subsequently placed into the D8 diffractometer in reflection geometry (with the normal of the tape perpendicular to the goniometer and perpendicular to the sample holder). The scan range for the diffraction pattern is from 5° to 40° (2θ) with a step size of 0.02° (2θ) and a counting time of 2 seconds per step. During the measurement the sample holder spins with 15 revolutions per minute around the normal of the tape, so that no further sample alignment is necessary. Subsequently the intensity is measured as function of the diffraction angle 2θ. The peak area of the 200 and 110 reflections is determined using standard profile fitting software, e.g. Topas from Bruker-AXS. As the 200 and 110 reflections are single peaks, the fitting process is straightforward and it is within the scope of the skilled person to select and carry out an appropriate fitting procedure. The 200/110 uniplanar orientation parameter is defined as the ratio between the 200 and 110 peak areas. This parameter is a quantitative measure of the 200/110 uniplanar orientation.

Preferably, the tapes are produced according to the process described in EP2307180.

At least 10 wt% of the tapes of the hollow article are arranged in an angle of 15° to -15°, more preferred in an angle of 10° to -10° and most preferred in an angle of 5° to -5°, regarding the extension direction of the pipe-like hollow article (also refer as hollow article). In a preferred embodiment at least 20 wt%, more preferred at least 30 wt% or 40 wt% of the tapes of the hollow article are arranged in an angle of 15° to -15°, more preferred in an angle of 10° to -10° and most preferred in an angle of 5° to -5° regarding the extension direction of the article to create the hollow article. The invention also encompasses embodiments where more than 50 wt%, or even at least 60 wt% of the tapes of the hollow article are arranged in an angle of 15° to -15°, more preferred in an angle of 10° to -10° and most preferred in an angle of 5° to -5° regarding the extension direction of the article to create the hollow article.
In some embodiments, at least 80 wt%, 90 wt% or even 100 wt% of the tapes of the pipe-like hollow article are arranged in an angle of 15° to -15° with regard to the extension direction of the article.

To maintain the shape and the buckle resistance of the pipe-like hollow article of some embodiments, some, preferably at least 20 wt%, of the tapes of the hollow article are arranged at an angle other than 15° to -15° with regard to the extension direction of the article, e.g. at an angle of 15 to 100° or -15 to -100°, preferably at an angle of 20 to 80° (or -20 to -80°) or at an angle of 30 to 60°C (or -30 to -60°), more preferably at an angle of 45°. Usually, tapes or layers comprising tapes in such orientation will form the outer and/or inner surface of the pipe-like hollow article but they may also be placed inbetween (layers of) tapes oriented at an angle of 15° to -15° with regard to the extension direction of the article.
In a preferred embodiment the article comprises at least 10 wt% (or preferably at least 20 wt%, at least 30 wt%, at least 40 wt% or more than 50 wt%) of tapes oriented at an angle of -15 to 15° with regard to the extension direction of the pipe-like hollow article and at least 20 wt% of tapes oriented at an angle of -30 to -60° (or 30 to 60°) with regard to the extension direction of the pipe-like hollow article.

The amount of tapes arranged at an angle other than -15 to 15° with regard to the extension direction of the article depends on the application of the pipe-like hollow article and the desired properties. For example, where torsional stiffness is required in addition to flexural stiffness, a higher percentage of tapes arranged at an angle other than -15 to 15° with regard to the extension direction of the article may be used, e.g. up to 30 wt%, 40 wt% or 50 wt%.

The angle with regard to the extension direction of the article may be defined as follows.

It is the angle between the direction of the tapes and the extension direction of the article. In a curved article, the extension direction follows the curvature of the article. Where the article is straight, the extension direction is the main extension direction of the article.

The angle may thus be defined as the angle between tape direction and the tangents to the locus of a theoretical line formed by the centers of gravity in the article. In other words, it is the angle between a theoretical line which is oriented perpendicular to the cross sectional plane of the article. (Where the cross sectional plane is placed at a perpendicular angle to the walls of the article.)

An angle of 0° means that the tape direction is the same as the extension direction of the article, thus it follows the (straight or curved) line of the pipe-like hollow article.

To create the hollow article preferably at least one tape is wound under said angle around a mandrel (and thus the tape is arranged in the article as claimed). At least 10 wt% of the tapes of ultra-high molecular weight polyethylene are arranged in an angle of 15° to -15° in the article, whereby the 200/110 uniplanar orientation of these tapes is parallel to the extension direction of these tapes and the extension direction of these overlapping tapes in the article differ from each other. Due to this arrangement of the tapes in these mentioned angles, the crystalline orientation in the tape is adjusted within the hollow article and thus the article is able to have a high flexural modulus.

Due to the use of tapes having the stated mechanical properties and the arrangement of the tapes in the hollow article, the hollow article has an improved flexural modulus and flexural strength. Due to the high flexural modulus and strength the hollow article is useful for a great variation of applications, whereby the hollow article according to the invention is at the same time extra light. However, the manufacturing process for the hollow article is easy and no special apparatus is needed.
For example, the pipe-like hollow article of the present invention is suited for sports articles or sports equipment or parts thereof which are exposed to flexural stress or flexural and torsional stress.

Usually, the pipe-like hollow article includes at least 2 layers of tapes, that is at each point of the wall of the pipe-like hollow article, at least 2 tapes overlap. Within the layer, the tapes may overlap. Where tapes are arranged unidirectionally within one layer, the tapes may overlap to some extent in lengthwise direction. Within a layer tapes may be oriented towards each other at different angles. Preferably, the tapes of one layer are arranged in parallel, i.e. unidirectionally.
The layers may form a cross-ply, i.e. tapes of one layer are arranged unidirectionally and at angle other than 0° to the tapes of the adjacent layer. The cross-angle between the direction of tapes in the layers may vary between 0 and 130°.

Preferably the tapes for creating the hollow article have a width of more than 10 mm and a thickness of less than 0.5 mm. The 200/110 uniplanar orientation is perpendicular to the width of the tapes and thus parallel to the extension direction of the tapes. Due to the use of thin tapes the tapes can easily be wound around a member to create the hollow article. Thus, also curves or winding articles are obtainable. The number of tapes for the hollow article in one area can be reduced by choosing a tape with a width of more than 10 mm. Thus, the manufacturing process saves time.

In a preferred embodiment the hollow article is made by a sheet of tapes. The sheet of tapes is preferably wound to create the hollow article. In one embodiment two sheets, more preferred four sheets of tapes are stacked together before they are wound to create the hollow article. Two or four sheets stacked together are mentioned as stack (of sheets).

Preferably, the tapes are arranged unidirectionally in the sheet (of tapes). Unidirectional means that the tapes are oriented parallel to each other within the sheet. In another preferred embodiment the sheet is a woven sheet made of tapes in warp and weft direction. All common weaving patterns are possible for example plain weave, twill weave or satin weave.

If a stack is used, preferably at least one sheet, more preferred all sheets of the stack exhibit tapes in unidirectional arrangement and/or in a woven form.

If tapes in a sheet have a unidirectional arrangement - preferably at least two sheets are cross plied to each other or arranged in a brick layer arrangement within the stack. In a brick layer arrangement the direction of tapes is the same in every sheet and the tapes of each sheet are offset to the tapes of adjoining sheets above or below that sheet, whereby the tapes in each sheet are oriented in a unidirectional way (this means parallel side-by-side). Preferably the tapes have no interspace between each other in one sheet. If there is a interspace - the tapes are arranged in spaced-apart, parallel side-by-side relationship in a first sheet, the interspace between the tapes in the first sheet is preferably smaller than the width of the tapes, after which tapes are arranged in spaced-apart, parallel side-by-side relationship in a second sheet, in which position the interspace in the first sheet are covered up by the tapes in the second sheet. Useful bricklayer arrangements are disclosed in EP 1 868 808 and WO 2008/040506.

The resin may be a thermoset, thermoplastic or thermoplastic elastomeric resin. Preferably, the resin is present on and/or between the tapes in film form. If tapes itself are used for creating the hollow article (thus no sheet of tapes is used) the film is preferably present on one surface of the tape or on both surfaces of the tape. The tape may comprise on one surface one type of resin or resin film and on the other surface a different resin or resin film. In another embodiment the hollow article is created by winding a sheet of tapes. Also here the sheet maybe covered by a film of resin, whereby each surface of the sheet maybe covered with a resin film. If a stack of sheets is used, the resin film may be arranged on the outer surface of the stack and/or between the sheets (of tapes) in the stack. A film is a thin sheet of material, which can cover the tape or sheet of tapes entirely or partially. In a preferred embodiment the tape(s) or the sheet(s) made of tapes is covered entirely by the film (this means more than 80 % of the tape surface or the sheet surface is covered by the film).

In a preferred embodiment the resin content of the pipe-like hollow article is as low as possible to reduce the overall weight of the article. Preferably, the resin content of the pipe-like hollow article based is less than 25 wt%, more preferably less than 15 wt% (based on the weight of the tapes and resin).

Even if at least one tape or sheet made of tapes is covered by the resin, no impregnation of the tape or sheet with resin occurs. The difference between coating or covering and impregnating is that in the coating or covering process only the surface of the tape or sheet is coated with this material. In an impregnating step the coating material is on the surface and also within the tapes or sheets.

The resin has a melting point below the melting point of the UHMWPE tapes (for example below 145°C). Low density polyethylene (LDPE) is one useful example.

The pipe-like hollow article may comprise an outer sheath or cover.

The hollow article is preferably used for sports articles or equipment or parts thereof. Due to the high flexural modulus and strength, the pipe-like hollow article is especially suited for sports equipment or parts thereof which need to resist bending.
These are e.g. shafts or handles of rackets, golf clubs, frames or parts thereof, e.g. for bicycles or rackets, arrows, fishing rods, oars or poles, as e.g. jumping poles or skiing poles, masts (for boats, including sailing boats) or surfing boards, e.g. for windsurfing.

In one embodiment, the hollow article is a shaft for a golf club, which can meet all the mechanical requirements of a golf club shaft (e.g. flexural modulus, flexural strength, torsional stiffness) with an exceptionally low weight. Golf club shafts are commonly constructed of carbon fiber composite materials, using different fiber orientations.
In one embodiment the golf club shaft comprises multiple layers with different tape orientations, preferably including layers in at least two or three different orientations. For example, one of the multiple layers is a first layer, being referred to as bias orientation layer, which is arranged on an angle of between 30 and 70 degrees relative to the extension direction of the shaft. Often, such a bias orientation layer is combined with another bias orientation layer on an angle of -30 to -70 degrees relative to the extension direction of the shaft. Thus, two bias orientation layers may be arranged as double layer in form of a cross ply, each layer usually being arranged at the same degree of angle with regard to the extension direction of the article but at opposite direction (thus, e.g. 45° and -45°). Another orientation layer is a "straight" layer oriented at an angle of between -15 and 15 degrees, and ideally at 0 degrees, relative to the extension direction of the shaft.
In one embodiment, the golf club shaft comprises between 30 wt% and 70 wt% of tapes or layers of tapes of the bias orientation, and between 70 wt% and 30 wt% of tapes layers or layers of tapes of the straight orientation, based on the weight of the tapes of the article.
The golf club shaft may also include layers at further different orientations, and the layers may extend throughout the golf club shaft, or may only extend for a section of the golf club shaft, for example as reinforcement of the grip-end section section of the golf club shaft, or of the tip-end section of the golf club shaft.
Thus, the constitution of layers of the golf club shaft (and also of the pipe-like hollow article in general) may differ along the length of it.
The bias layers, which provide torsional stiffness and buckle resistance to the golf club shaft, are preferably constructed of tapes with a high modulus, greater than 150 GPa, preferably greater than 175 GPa, and most preferably greater than 200 GPa. The straight layer, which provides flexural strength and stiffness to the shaft, is preferably constructed of tapes with high strength, greater than 2 GPa, preferably greater than 2.6 GPa, and most preferably greater than 3.6 GPa, and which have an elongation at break in the range of 1,2-2,5%, more preferably 1,5-2,4%, and most preferably 1,7-2,3%. The modulus of the tapes in the straight layer is between 150 and 250 GPa, depending on the strength and elongation at break of the tapes.
The layers of tapes are typically bonded by thin layers of resin, e.g. LDPE, resulting in weight% of high tensile tapes in excess of 85%, more preferably in excess of 89%, most preferably in excess of 92%, based on the total weight of tapes and resin.
The golf club shaft is manufactured by winding and/or wrapping the UHMWPE tapes or sheets of tapes (as described below) around a tapered mandrel. For a shaft for a wood type club, the shaft length is typically 1050-1250 mm, the outer diameter at the tip end is typically 7-10 mm, and at the grip end typically 14-17 mm. The weight of the shaft preferably is less than 60 gram, more preferably less than 50 gram, and most preferably less than 40 gram.

In another embodiment, the pipe-like hollow article of the invention is a fishing rod. For fishing rods it is important that the rod is flexible to some extent and can distribute bending forces throughout the rod.
In one embodiment, the fishing rod comprises multiple layers of tapes (or sheets of tapes). Each of the layers is oriented in the 'straight' orientation, thus at an angle of -15 to 15° with regard to the extension direction of the rod. Preferably, the modulus of the tapes in the different layers increases from the inside of the rod towards the outer layers of the rod. In one embodiment, the tapes in the different layers have the same, high strength.
With regard to the distribution or thickness of the layers over the length of rod, the inner layer of lower modulus tapes covers the whole length of the rod, whereas the layers of tapes having an increasing modulus are preferably arranged in such a way that the layer thickness progressively increases towards the rear end of the rod.
Preferably, at least 50 wt% of tapes (based on the weight of all tapes of the article), more preferably at least 70 wt% and even more preferably at least 85 wt% of tapes are oriented in the 'straight' orientation, thus at an angle of -15 to 15° with regard to the extension direction of the rod.

A further aspect of this invention is a method for making a pipe-like hollow article as described in the paragraphs above. In this process at least one sheet of ultra-high molecular weight polyethylene (UHMWPE) tapes, coated with a resin, is wound on a mandrel to create said article, whereby the mandrel with at least one sheet of tapes and resin is heated to melt the resin, whereby the temperature stays below 150°C, preferably below 135°C. In the method for making the pipe-like hollow article the at least one sheet of ultra-high molecular weight polyethylene tapes is wound on the mandrel to create the pipe-like hollow article in such a manner that the ultra-high molecular weight polyethylene tapes have an angle of 15 to -15° with regard to the extension direction of the article.

Preferably the at least one sheet of ultra-high molecular weight polyethylene tapes, more preferably at least half of the sheets of ultra-high molecular weight polyethylene tapes is/are wound on the mandrel in an angle in the range of 15 to - 15°, whereby the 200/110 uniplanar orientation of these ultra-high molecular weight polyethylene tapes is parallel to the extension direction of the tapes.

Preferably, more than one sheet of tapes for creating the pipe-like hollow article is used. Preferably, the sheets are arranged in a cross plied arrangement and/or in a brick layer arrangement, whereby a film of resin is arranged in-between, on top and/or on the bottom of the sheets (of tapes).

Yet another aspect of the invention is a process for making the pipe-like hollow article made of ultra-high molecular weight polyethylene tapes, in which the ultra-high molecular weight polyethylene (UHMWPE) tapes are wound around a mandrel, whereby the tapes are coated with a resin and wherein the mandrel with the tapes are heated to melt the resin, whereby the temperature is below 150°C, preferably below 135 °C, whereby at least 10 wt% of the tapes are wound on the mandrel in an angle of 15° to -15° with regard to the extension direction of the mandrel.

Preferably in both processes (article made by tapes and article made by sheets) at least 30 wt%, more preferably at least 50 wt% or at least 60 wt% are applied to the mandrel in an angle of 15° to -15°, more preferred in an angle of 10° to -10° and most preferred in an angle of 5° to -5° regarding the extension direction of the mandrel to create the hollow article.

For both processes (article made by tapes and article made by sheets) no process step is carried out at a temperature higher than the equilibrium melting temperature of the UHMWPE tapes, that is usually no step is carried out above 150°C. This means all process steps in both processes are carried out below 150 preferably below 135 °C. Temperatures higher than 150°C destroy the crystalline structure of the tapes and thus the tapes will lose their mechanical properties.

In both processes the applied tapes preferably have a tensile strength of greater than 1.5 GPa according to ASTM D882-00 and a modulus of greater than 150 GPa according to ASTM D822-00 and a 200/110 uniplanar orientation parameter of at least 3.

Preferably, the tapes in both processes are arranged to create the article in such a manner that the extension direction of at least half of tapes arranged at an cross angle in the article differ from each other.

If a stack made of sheets (made of tapes) is used at least two sheets are treated with a resin film under a temperature of 135°C and 35 bar. The obtained composition is wound or rolled up around a mandrel or any other shaped template to create the desired hollow article. Subsequently the article is subjected to heat and pressure to obtain the final hollow article.

For creating the hollow article preferably a sheet of tapes is wound several times around the mandrel. The mandrel is preferably expandable and heatable. Mandrel and wound up composition are placed in a mold. The mold is heated. By expanding the mandrel a preliminary pipe-like article is subjected to pressure. Under increased temperature (below 150°C) and pressure the final article is shaped. If desired - a smooth inner surface of the hollow article can be obtained by either introducing a different material into (a part of) the tape layer (sheet) adjacent to the mandrel (e.g. nylon, a metal foil) or by melting the tapes of the inner layer.

In one embodiment, the hollow article can be reinforced by reinforcing fibers, like aramid (preferably poly p-phenylene terephthalamide (PPTA)), UHMWPE fibers (as e.g. known under the tradename Dyneema), or carbon fibers. In one preferred embodiment the hollow article made of tapes or sheet of tapes is coated with a matrix. The matrix is preferably arranged on the outside surface of the hollow article. The matrix is preferably made of low modulus polyethylene having 200/110 uniplanar orientation parameter below 3, more preferred below 2 and most preferred below 1.

All embodiments regarding the tape orientation in the sheets as described for the hollow article are also applicable in the process for creating the hollow article. In addition, all product features mentioned in the process for making the hollow article are also applicable for the hollow article itself.

## Claims

1. Pipe-like hollow article comprising ultra-high molecular weight polyethylene (UHMWPE) tapes and a resin, whereby in the article the tapes are wound to create the article wherein the extension direction of at least 10 wt% of the tapes in the article is at an angle in the range of -15° to 15° with regard to the extension direction of the article.

2. Pipe-like hollow article according to claim 1 wherein the tapes have a modulus of at least 150 GPa according to ASTM D822-00, preferably at least 200 GPa.

3. Pipe-like hollow article according to claim 1 or 2 wherein the tapes have a 200/110 uniplanar orientation parameter of at least 3.

4. Pipe-like hollow article according to any of the foregoing claims, wherein the extension direction of at least 20 wt%, preferably at least 30 wt%, more preferably at least 40 wt%, even more preferably more than 50 wt% of the tapes in the article is at an angle of -15° to 15° with regard to the extension direction of the article.

5. Pipe-like hollow article according to any of the foregoing claims, wherein the tapes have a width of more than 10 mm and a thickness of less than 0.5 mm.

6. Pipe-like hollow article according to any of the forgoing claims, whereby the resin is present on and/or between the tapes in form of a film.

7. Pipe-like hollow article according to any of the foregoing claims, wherein the article comprises at least one sheet of tapes, which is wound to create the article.

8. Pipe-like hollow article according to claim 7, wherein the at least one sheet of tapes is covered by at least one resin film.

9. Pipe-like hollow article according to claim 7 or 8, wherein the article comprises at least two sheets of tapes, whereby a resin film is between these sheets of tapes.

10. Pipe-like hollow article according to any one of the foregoing claims 7 to 9, wherein the at least one sheet of tapes is a unidirectional sheet of tapes or the tapes are woven to form the sheet.

11. Pipe-like hollow article according to any one of the foregoing claims 6 to 10, further comprising a sheet of tapes, wherein the tapes of said sheet of tapes are oriented in an extension direction which is oriented at an angle of between 90° and 15° to between -15° and -90° to the extension direction of the article.

12. Pipe-like hollow article according to claim 11, wherein the at least one sheet of tapes with tapes oriented in an extension direction which is oriented at an angle of between 90° and 15° to between -15° and -90° to the extension direction of the article forms the inner and/or outer surface of the pipe-like hollow article.

13. Sports equipment comprising the pipe-like hollow article according to any one of claims 1-12, such as a golf club shaft, a frame, an arrow, a racket or part thereof, a fishing rod, an oar or a pole.

14. Process for making a pipe-like hollow article, whereby at least one sheet of ultra-high molecular weight polyethylene tapes, coated with aresin, is wound on a mandrel to create the article **characterized in that** the mandrel with the at least one sheet of tapes and resin is heated to melt the resin, whereby the temperature is below 150 whereby the at least one sheet of ultrahigh molecular weight polyethylene tapes is wound on the mandrel to create the pipe-like hollow article in such a manner that the ultra-high molecular weight polyethylene tapes have an angle of -15° to 15° with regard to the extension direction of the article.

15. Process for making a pipe-like hollow article comprising ultra-high molecular weight polyethylene tapes, whereby the ultra-high molecular weight polyethylene tapes are wound around a mandrel, whereby the ultra-high molecular weight polyethylene tapes are coated with a resin and **characterized in that** the mandrel with the tapes and resin is heated to melt the resin, whereby the temperature is below 150°C, whereby at least 10 wt% of the ultra-high molecular weight polyethylene tapes are wound around the mandrel with the main extension direction of these tapes in an angle of -15° to 15° with regard to the extension direction of the mandrel.
